# EUROPEAN PATENT SPECIFICATION

(11) **EP 0 570 346 B1**
(45) Date of publication and mention of the grant of the patent: **22.03.2000**
(21) Application number: 93830201.5
(22) Date of filing: 14.05.1993
(51) Int. Cl.: B23Q 16/00, B65B 59/00

(54) **Method and device for adjusting the position of a movable member with respect to a stationary datum point in a cartoning machine**
Verfahren und Vorrichtung zum Einstellen der Ruhelage eines verstellbaren Teils relativ zu einem stationären Bezugspunkt in einer Kartoniermaschine
Méthode et dispositif pour régler la position d'un élément mobile par rapport à un point de référence fixe dans une machine d'encartonnage

(30) Priority: 15.05.1992 IT BO920180
(43) Date of publication of application: 18.11.1993
(73) Proprietor: A.M.R.P. HANDELS AG, Basel (CH)
(72) Inventor: Martelli, Guglielmo, Loddington, Northants NN14 1LA (GB)
(74) Representative: Dall'Olio, Giancarlo

(56) References cited:
- DE-A- 2 027 175
- DE-A- 2 728 587
- DE-A- 3 446 846
- FR-A- 1 206 562
- FR-A- 1 549 496
- GB-A- 793 889
- GB-A- 856 178
- US-A- 1 950 039
- US-A- 3 545 320
- US-A- 3 704 956
- US-A- 4 554 777
- US-S- D 294 579

## Description

The present invention relates to a method and a device used for adjusting a movable member with respect to a stationary datum point in a cartoning machine.

It is known that the need to locate a movable member to different operating positions is present in many technical fields, and particularly in construction of automatic machines.

For instance, and as a mere example, this need is evident when the position of a restraining member must be adjusted in accordance with a different dimension of an article to be restrained, for instance upon a guide along which the article is being transported.

Presently, this problem is generally solved by an empiric way, that is releasing the movable member, that is equipped with locking means, and then locking it again in the desired position.

Obviously, this proceeding is unsatisfactory as far as both productivity and precision are concerned.

Releasing and blocking the movable member require a long working time, also because of the necessity of finding a correct operating position with reference to the stationary datum point.

This position is never the same for different series of articles having the same shape and size, since this position is found each time on the basis of the operator's experience and ability.

Recently, a number of actuating means have been used, which are connected to a central unit and designed for displacement of the movable member.

When the size of the articles undergoing operations is changed, then a proper program is run which gives the machine preset instructions so as to adjust the position of the movable operating member with reference to a stationary datum poit, by means of the actuating means just described.

It is clear that such solution is rather expensive not only as for fitting up the device on the machine, but also as for maintenance.

The device requires proper associated fittings and a proper interface device set between the central unit and the actuating means, and these facts call for very specialized personnel for maintenance.

Notwithstanding the complexity of this assembly, relocation of the movable member is never as precise as it should be, because the actuating means are not able to make the movable member to take the exact old position again after they have been released and moved due to a size changing.

Document US-A-4.554.777 discloses a machine equipped with tools and devices for adjustment to various formats in accordance with the products to be packaged and the related packages being used. In order to be able to effect adjustment as intended and quickly by means of displaceable parts equipped with set screws at the changeover locations, the machine has a mobile drive unit, which can be coupled with the set screws of the various changeover locations. The drive unit is controlled by a control unit which is programmable in accordance with the format, and is used by the operator at a give changeover location as indicated by the control unit.

The object of the present invention is to provide a method that allows for a quick and precise adjustment of the movable member position with respect to a stationary datum point, without employing specialized personnel or requiring the help of sophisticated devices or apparatuses.

Another object of the invention is to provide a device that is simple, quick in working and with a low production cost, also considering the result obtained by using it.

The above object is obtained in accordance with the content of the two independent claims.

The characteristic features of the invention are highlighted in the following description, with particular reference to the drawings attached hereto, which show various embodiments of the device that incorporates the subject method, and in particular:
Fig. 1 shows a perspective view of a first embodiment of the adjustment device that is the subject of the present invention;
Fig. 2 shows a schematic side view of a movable working member whose position can be adjusted by means of the subject device;
Figs. 3, 4, 5 and 6 are respectively perspective views of further embodiments of the subject device.

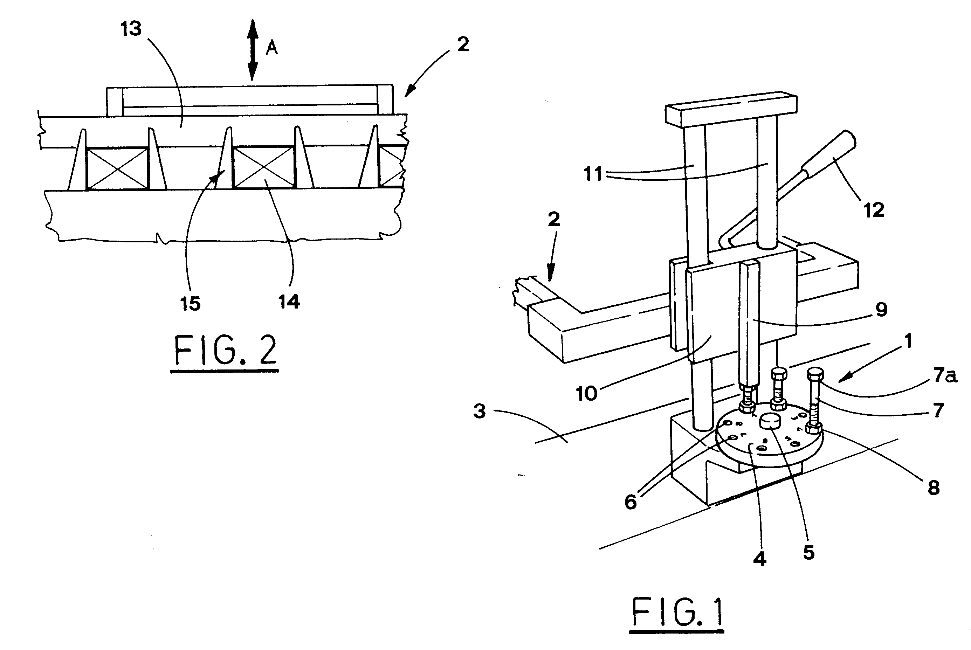

Referring first to Figs. 1 and 2, reference numeral 1 indicates the device that allows to adjust the position of a movable working member 2 with respect to a stationary datum surface 3.

The adjustment device 1 comprises a rotary disk plate 4 that can rotate upon an axis perpendicular to the datum surface 3.

The disk plate 4 features a plurality of peripheral equispaced recesses 6 which are aimed to receive and hold a series of stop means 7 having different length.

These stop means 7 include threaded stems having different length which are blocked to the disk plate 4 by respective nuts 8.

A sliding support 10 is slidingly set on vertical guides 11, which includes a pair of uprights, and equipped with conventional locking means which can be tightened and released through a lever 12. The sliding support 10 also features a prominence 9.

The head 7a of a selcted stem 7 is located in the path of the prominence 9 of the sliding support 10, so as to strike the prominence and stop the sliding support, thus setting the position of the working member 2 that is fastened thereto.

In the example shown herein the working member 2 includes a bar 13 that has the task of restraining articles 14 which are moving along a feed line under the action of holding means 15, i.e. in the cartoning machine.

When the size of the articles 14 undergoing operation is changed, the bar 13 must be moved to a position corresponding to the height of the articles, as indicated by the arrow A in Fig. 2.

To do this, after having released the sliding support 10 by acting on the lever 12, the sliding support 10 must by raised up and the disk plate 4 must be rotated until the desired stem 7 is located right under the prominence 9.

Advantageously, the disk plate 4 is equipped with elastic click means designed for the definition of the various positions thereof.

The sliding support 10 is then lowered so that the prominence 9 goes to rest on the head 7a of the selected stem 7 under the action of gravity.

The sliding support 10 is locked again in this last working position. Adjustment of the position of the movable working member 2 is therefore very quick and easy.

In particular the device allows for unequivocally individuating the desired position for the working member, by means of the abutment of the prominence 9 on the respective stem 7.

Moreover, it is possible to change in an almost continuous way, within a predetermined range, the distance of the movable working member 2 from the datum surface 3, by providing a suitable series of stems 7.

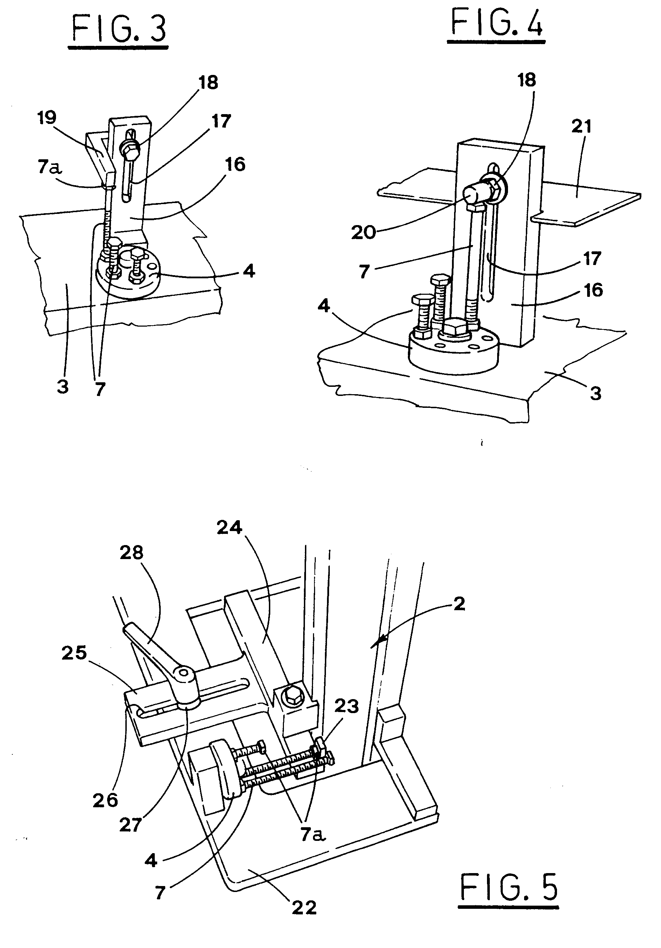

A different embodiment of the adjustment device is shown in Fig. 3, where the guides 11 are replaced with a plate 16 arranged vertical on the datum surface 3.

The plate 16 features a slot 17 and the slide moves on the plate. The slide can be fixed to the plate by means of a screw that passes through the slot.

An arm 19 extends horizontally from one side of the slide and passes beside a side of the plate 16. The arm 19 goes in abutment on the head 7a of a selected stem 7 borne by the disk plate 4.

Fig. 4 shows a further embodiment of the subject device in which a plate 16, similar to the plate previously described, has a longitudinal slot 17.

In this case the sliding support 10 has a pin 20 axially protruding from the screw 18, so as to result perpendicular to the slot 17. The pin 20 goes in abutment on the head of a selected stem 7.

The plate 16 guides an horizontal tab 21 that is made integral with the sliding support 10 and that forms the movable member 2 whose position is to be adjusted.

The embodiment shown in Fig. 5 includes a base 22 that is adapted to support the disk plate 4 bearing the stems 7.

In this case the disk plate 4 rotates upon a horizontal axis.

After that the disk plate 4 has been rotated up to the desired position, the head 7a of the selected stem 7 results to be in the path of a wing 23 that extends vertically from a bar 24 made integral with the movable member 2, which forms the sliding support.

A horizontal plate 25 extending from the bar 24 features a longitudinal slot 26, and locking means 27, that can be tightened or released by a lever 28, and that pass through the slot 26.

The position of the movable member 2 can be adjusted by moving it horizontally until the wing 23 strikes the head of the selected stem 7, thus fixing the position of the movable member 2 as illustrated hereinafter.

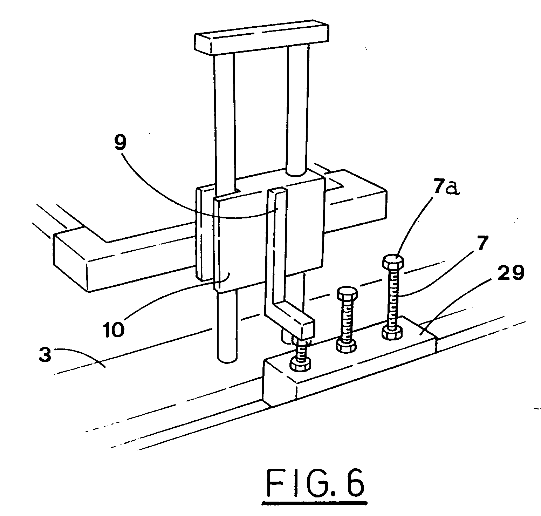

In the example shown in Fig. 6, the stems 7, which are different in length form one another, are supported by a further sliding support 29 that can slide and is guided with respect to the datum surface 3.

The stems 7 are fixed to the sliding support 29 by respective nuts 8.

In this case, after unlocking the sliding support 10 that carries the movable member 2, the further sliding support 29 is displaced until the prominence 9 is lined up with the selected stem 7.

Advantageously, the further sliding support 29 is equipped with elastic click means designed to individuate a series of position to be selected.

As already described the sliding support 10 is moved until it goes in abutment on the head 7a of the stem 7 under the action of gravity, and then locked therein.

The method and the device described herein allow for adjusting the position of a movable working member with respect to a datum surface, in a quick and precise way, without the need of sophisticated mechanisms or machines.

The adjustment operation is easily carried out without the need of specialized personnel, because of the extreme semplicity that forms the basis of the method.

To make the adjustment operation easier, the stems 7, having different lengths, may be painted with different colours or bear proper numbers, so that each stem can be immediately recognized.

The adjustment obtained in this way is extremely precise, and does not depend on the experience and/or skillfulness of the operator.

As a matter of fact, the stop means described above form something like a "mechanical memory" that always ensures a correct positioning. In particular these stop means enable the positioning of movable working members in the same positions for articles having the same size which undergo operations before and after other articles having different size.

If, after that the size of the articles has been changed, the same stem 7 must be used for articles having the size of previous articles, then it is possible adantageously to set a nut immediately under the head 7a of the stems, this nut being coloured and the colou being connected to a particular size.

In this way the stem 7 is not changed in case that changing the article size does not require to displace the movable member to a different position, and this happens because the operator can see different colours applied to the nut, each colour corresponding to a predetermined article size.

## Claims

1. Method for providing a cartoning machine, with means (1) for adjustment of a movable working member (2) of the said machine with respect to a stationary datum surface (3), said working member (2) being carried by a sliding support (10; 24) which is mounted on guiding means (11;16) perpendicular to said datum surface (3), so that a predetermined distance is set between said working member (2) and said datum surface (3) in accordance with the size of articles that undergo operations and maintained until articles with a different dimension are to be processed,
**characterised in that** it includes connecting a plurality of stop means (7) having different length to said datum surface (3), in correspondence of said working member (2), whereby the head (7a) of a selected stop means (7) is locatable in the path of the sliding support (10; 24) along said guiding means (11; 16) so that the working member (2) can be set in a position in which the sliding support is in abutment on one of said stop means (7) and then blocked on the guiding means.

2. A cartoning machine with means (1) for adjustment of a movable working member (2) of the said machine with respect to a stationary datum surface (3), said working member (2) being carried by a sliding support (10; 24) which is mounted on guiding means (11; 16) perpendicular to said datum surface (3), so that a predetermined distance is set between said working member (2) and said datum surface (3) in accordance with the size of articles that undergo operations and maintained until articles with a different dimension are to be processed,
**characterised in that** the adjustment means includes a plurality of stop means (7) connected to said datum surface (3), these stop means being different in length from each other, whereby the head (7a) of a selected stop means (7) is locatable in the path of the sliding support (10; 24) along said guiding means (11; 16) so that the working member (2) can be set in a position in which the sliding support is in abutment on one of said stop means (7) and then blocked on the guiding means (11; 16) by blocking means (12; 18; 28).

3. A cartoning machine as claimed in claim 2, **characterised in that** said stop means (7) are arranged along the circumference of a rotatable member (4) that can be rotated upon an axis that is perpendicular to said datum surface (3).

4. A cartoning machine as claimed in claim 3, **characterised in that** said rotatable member (4) comprises a disk plate (4) that can be rotated in steps and that features a plurality of recesses (6) for fitting said stop means (7) therein.

5. A cartoning machine as claimed in claim 2, **characterised in that** said stop means (7) comprise threaded stems, each stem being different in length from the others and having a related nut (8) for blocking thereof.

6. A cartoning machine as claimed in claim 2, **characterised in that** said guiding means comprise a pair of uprights along which the sliding support (10) fastened to said working member (2) runs, with said sliding support (10) equipped with locking means that can be tightened and released through a lever (12).

7. A cartoning machine as claimed in claim 2, **characterised in that** said guiding means (16) comprises a plate arranged perpendicular to said datum surface (3) and featuring a slot (17), with a screw (18) passing through said slot (17) for blocking the sliding support (10) to said plate (16), the working member being fastened to said support which runs along said slot (17).

8. A cartoning machine as claimed in claim 7, **characterised in that** said sliding support (10) comprises an arm (19) extending horizontally from a side of said plate (16) and adapted to abut on said stop means (7).

9. A machine as claimed in claim 7, **characterised in that** said sliding support (10) has a pin (20) that extends transversally from said slot (17) and is adapted to go in abutment on said stop means (7).

10. A machine as claimed in claim 3, **characterised in that** said rotatable member (4) is supported in a way such that it can rotate upon a horizontal axis, with a wing (23) extending vertically from a bar (24), which forms the sliding support, made integral with said movable working member (2), so that said wing (23) is in abutment on said stop means (7) when said movable working member (2) is located in the adjusted position, with a plate (25) extending horizontally from said bar (24) and featuring a longitudinal slot (26) through which locking means (27) pass for locking said movable working means (2).

11. A machine as claimed in claim 2, **characterised in that** a series of stop means (7) are mounted on a further sliding support (29) that is made to run parallel to said datum surface (3).

12. A machine as claimed in claim 2, **characterised in that** said stop means (7) are mounted on a further sliding support (29) that is made to run parallel to said datum surface (3), said stop means being fitted in such a way that they can be replaced.

13. A machine as claimed in claim 2, **characterised in that** said stop means (7) are fitted into a recess made in said datum surface (3) in such a way that they can be replaced.

## Patentansprüche

1. Verfahren zur Bereitstellung einer Kartoniermaschine, die mit Mitteln (1) zum Einstellen eines beweglichen Arbeitsteiles (2) der Maschine in Relation zu einer stationären Bezugstelle (3) ausgestattet ist, wobei das Arbeitsteil (2) von einem gleitfähigen Stützteil (10, 24) getragen ist, das auf Führungsmitteln (11, 16) montiert ist, die sich senkrecht zur Bezugsstelle (3) erstrecken, so daß ein vorgegebener Abstand zwischen dem Arbeitsteil (2) und der Bezugsstelle (3) vorgegeben ist in Übereinstimmung mit der Größe der zu verarbeitenden Produkte und der solange aufrecht erhalten wird, bis Produkte einer unterschiedlichen Dimensionierung zu verarbeiten sind, dadurch gekennzeichnet, daß das Verbinden einer Mehrzahl von Haltemitteln (7), die eine unterschiedliche Länge aufweisen, mit der Bezugsstelle (3) umfaßt ist, wobei dies in Übereinstimmung mit dem Arbeitsteil (2) durchgeführt wird, wobei der Kopf (7a) eines bestimmten Haltemittels (7) innerhalb eines Weges des gleitfähigen Stützteiles (10, 24) entlang der Führungsmittel (11, 16) anordbar ist, so daß das Arbeitsteil (2) in eine Positionierung verbracht werden kann, in welcher das gleitfähige Stützteil angrenzend zu einem der Haltemittel (7) angeordnet und anschließend im Bereich der Führungsmittel fixiert ist.

2. Kartoniermaschine mit Mitteln (2) zum Einstellen eines beweglichen Arbeitsteiles (2) der Maschine in Relation zu einer stationären Bezugsstelle (3), wobei das Arbeitsteil (2) von einem gleitfähigen Stützteil (10, 24) getragen ist, das in Führungsmitteln (11, 16) montiert ist, die sich senkrecht zur Bezugsstelle (3) erstrecken, so daß ein vorgegebener Abstand zwischen dem Arbeitsteil (2) und der Bezugsstelle (3) in Übereinstimmung mit der Größe der Produkte vorgegeben ist, die zu verarbeiten sind und die solange beibehalten wird, bis Produkte mit einer unterschiedlichen Größe zu verabreiten sind, dadurch gekennzeichnet, daß die Einstellmittel eine Mehrzahl von Haltemitteln (7) beinhalten, die mit der Bezugsstelle (3) verbunden sind, wobei diese Haltemittel relativ zueinander unterschiedliche Längen aufweisen und wobei der Kopf (7a) eines ausgewählten Haltemittels (7) innerhalb eines Verlaufes des gleitfähigen Stützteiles (10, 24) entlang der Führungsmittel (11, 16) angeordnet ist, so daß das Arbeitsteil (2) in eine Positionierung verbracht werden kann, in welcher das gleitfähige Stützteil angrenzend zu dem Haltemittel (7) angeordnet und anschließend durch Feststellmittel (12, 18, 28) auf den Führungsmitteln (11, 16) fixiert ist.

3. Kartoniermaschine nach Anspruch 2, dadurch gekennzeichnet, daß Haltemittel (7) entlang eines Umfanges einer Rotationseinrichtung (4) angeordnet sind, die relativ zu einer Achse rotationsfähig ist, die senkrecht zur Bezugsstelle (3) verläuft.

4. Kartoniermaschine nach Anspruch 3, dadurch gekennzeichnet, daß die Rotationseinrichtung (4) eine Scheibenplatte (4) aufweist, die schrittweise gedreht werden kann und die eine Mehrzahl von Vertiefungen (6) zur Aufnahme der Haltemittel (7) aufweist.

5. Kartoniermaschine nach Anspruch 2, dadurch gekennzeichnet, daß die Haltemittel (7) mit Gewinden versehene Stangen aufweist, wobei jede Stange relativ zu den anderen Stangen mit einer unterschiedlichen Länge versehen ist und eine zugehörige Nut (8) zu ihrer jeweiligen Festsetzung aufweist.

6. Kartoniermaschine nach Anspruch 2, dadurch gekennzeichnet, daß die Führungsmittel ein Paar von Pfosten aufweisen, entlang derer das gleitfähige Stützteil (10) mit dem Arbeitsteil (2) befestigt verläuft und bei dem das gleitfähige Stützteil (10) mit Befestigungsmitteln ausgestattet ist, die über einen Hebel (12) angezogen und entspannt werden können.

7. Kartoniermaschine nach Anspruch 2, dadurch gekennzeichnet, daß die Führungsmittel (16) eine Platte aufweisen, die senkrecht zur Bezugsstelle (3) angeordnet ist und einen Schlitz (17) aufweist, wobei eine Schraube (18) sich durch den Schlitz (17) hindurch erstreckt, um das gleitfähige Stützteil (10) im Bereich der Platte (16) zu befestigen, wobei das Arbeitsteil im Bereich des Stützteiles (17) befestigt ist, welches entlang des Schlitzes (17) beweglich ist.

8. Kartoniermaschine nach Anspruch 7, dadurch gekennzeichnet, daß das gleitfähige Stützteil (10) einen Arm (19) aufweist, der sich in horizontaler Richtung ausgehend von der Platte (16) erstreckt und derart gestaltet ist, daß eine benachbarte Anordnung zu den Haltemitteln (7) vorliegt.

9. Maschine nach Anspruch 7, dadurch gekennzeichnet, daß das gleitfähige Stützteil (10) einen Stift (20) aufweist, der sich in transversaler Richtung ausgehend vom Schlitz (17) erstreckt und der derart ausgebildet ist, daß eine angrenzende Anordnung zu den Haltemitteln (7) vorliegt.

10. Maschine nach Anspruch 3, dadurch gekennzeichnet, daß die rotationsfähige Einrichtung (4) derart gehaltert ist, daß diese relativ zu einer horizontalen Achse rotieren kann und daß sich ein Flügel (23) ausgehend von einer Schiene (24) erstreckt, die die gleitfähige Stütze ausbildet und die integral mit dem beweglichen Arbeitsteil (2) ausgebildet ist, so daß der Flügel (23) angrenzend zu den Haltemitteln (7) angeordnet ist, wenn das bewegliche Arbeitsstück (2) in der ausgerichteten Positionierung angeordnet ist und wobei sich eine Platte (25) ausgehend von der Schiene (24) in horizontaler Richtung erstreckt und einen sich in Längsrichtung erstreckenden Schlitz (26) aufweist, durch welchen sich Befestigungsmittel (27) hindurch erstrecken, um das bewegliche Arbeitsteil (2) zu befestigen.

11. Maschine nach Anspruch 2, dadurch gekennzeichnet, daß eine Anzahl von Haltemitteln (7) auf einem weiteren gleitfähigen Stützteil (29) angeordnet sind, das derart ausgebildet ist, das ein Verlauf parallel zum Bezugsteil (3) vorliegt.

12. Maschine nach Anspruch 2, dadurch gekennzeichnet, daß die Haltemittel (7) im Bereich eines weiteren gleitfähigen Stützteiles (29) angeordnet sind, das derart ausgebildet ist, daß ein Verlauf parallel zum Bezugsteil (3) vorliegt und daß die Haltemittel derart ausgebildet sind, daß eine Auswechselung möglich ist.

13. Maschine nach Anspruch 2, dadurch gekennzeichnet, daß die Haltemittel (7) in eine Vertiefung eingepaßt sind, die im Bereich der Bezugsstelle (3) derart angeordnet ist, daß eine Auswechselung möglich ist.

## Revendications

1. Procédé de réalisation d'une machine d'encartonnage comportant un moyen (1) pour ajuster un organe de travail mobile (2) de la machine par rapport à une surface de référence stationnaire (3), l'organe de travail (2) étant porté par un support coulissant (10,24) qui est monté sur des moyens de guidage (11,16) perpendiculaires à la surface de référence (3) de telle façon qu'une distance prédéterminée soit établie entre l'organe de travail (2) et la surface de référence (3) en fonction de la dimension d'articles soumis à des opérations et que cette distance soit maintenue jusqu'à ce que des articles ayant une dimension différente doivent être traités, caractérisé en ce qu'il comporte la connexion d'une pluralité de moyens de butée (7), ayant des longueurs différentes, à la surface de référence (3), en regard de l'organe de travail (2), de telle façon que la tête (7a) d'un moyen de butée sélectionné (7) puisse être placée sur le trajet du support coulissant (10,24) le long des moyens de guidage (11,16) et qu'ainsi l'organe de travail (2) puisse être réglé dans une position dans laquelle le support coulissant se trouve en butée sur l'un des moyens de butée (7) et alors bloqué sur les moyens de guidage.

2. Machine d'encartonnage comportant un moyen (1) pour ajuster un organe de travail mobile (2) de la machine par rapport à une surface de référence stationnaire (3), l'organe de travail (2) étant porté par un support coulissant (10,24) qui est monté sur des moyens de guidage (11,16) perpendiculaires à la surface de référence (3) de telle façon qu'une distance prédéterminée soit établie entre l'organe de travail (2) et la surface de référence (3) en fonction de la dimension d'articles soumis à des opérations et que cette distance soit maintenue jusqu'à ce que des articles ayant une dimension différente doivent être traités, caractérisé en ce que le moyen d'ajustement comporte une pluralité de moyens de butée (7) connectés à la surface de référence (3), ces moyens de butée ayant des longueurs différentes les uns des autres de telle façon que la tête (7a) d'un moyen de butée sélectionné (7) puisse être placée sur le trajet du support coulissant (10,24) le long des moyens de guidage (11,16) et qu'ainsi l'organe de travail (2) puisse être réglé dans une position dans laquelle le support coulissant se trouve en butée sur l'un des moyens de butée (7) et alors bloqué sur les moyens de guidage (11,16) par des moyens de blocage (12,18,28).

3. Machine d'encartonnage suivant la revendication 2 caractérisée en ce que les moyens de butée (7) sont disposés suivant la circonférence d'un organe rotatif (4) qui peut tourner autour d'un axe qui perpendiculaire à la surface de référence (3).

4. Machine d'encartonnage suivant la revendication 3 caractérisée en ce que l'organe rotatif (4) est constitué par une plaque (4) en forme de disque qui peut tourner d'une manière intermittente et qui présente une pluralité de creux (6) pour l'emboîtement des moyens de butée (7) dans ces creux.

5. Machine d'encartonnage suivant la revendication 2 caractérisée en ce que les moyens de butée (7) sont constitués par des tiges filetées, chaque tige ayant une longueur différente de celle des autres tiges et comportant un écrou associé (8) pour le blocage de cette tige.

6. Machine d'encartonnage suivant la revendication 2 caractérisée en ce que les moyens de guidage comprennent une paire de montants le long desquels se déplace le support coulissant (10) fixé à l'organe de travail (2), le support coulissant (10) étant équipé de moyens de blocage qui peuvent être serrés et désertés par l'intermédiaire d'un levier (12).

7. Machine d'encartornage suivant la revendication 2 caractérisée en ce que le moyen de guidage (16) est constitué par une plaque disposée perpendiculairement à la surface de référence (3) et présentant une fente (17), avec une vis (18) passant à travers la fente (17) afin de bloquer le support coulissant (10) sur la plaque (16), l'organe de travail étant fixé au support qui se déplace le long de la fente (17).

8. Machine d'encartonnage suivant la revendication 7 caractérisée en ce que le support coulissant (10) comprend un bras (19) s'étendant horizontalement à partir d'un côté de la plaque (16) et adapté de manière à venir buter contre les moyens de butée (7).

9. Machine d'encartonnage suivant la revendication 7 caractérisée en ce que le support coulissant (10) comporte un téton (20) qui s'étend transversalement à partir de la fente (17) et qui est adapté de manière à venir en butée sur les moyens de butée (7).

10. Machine d'encartonnage suivant la revendication 3 caractérisée en ce que l'organe rotatif (4) est supporté de telle façon qu'il puisse tourner autour d'un axe horizontal et une aile (23) s'étend verticalement à partir d'une barre (24) qui forme le support coulissant solidaire de l'organe de travail mobile (2) de telle façon que l'aile (23) soit en butée contre les moyens de butée (7) lorsque l'organe de travail mobile (2) est situé dans la position ajustée, une plaque (25) s'étendant horizontalement à partir de la barre (24) et présentant une fente longitudinale (26) à travers laquelle passe un moyen de blocage (27) afin de bloquer l'organe de travail mobile (2).

11. Machine d'encartonnage suivant la revendication 2 caractérisée en ce qu'une série de moyens de butée (7) sont montés sur un support coulissant additionnel (29) qui est monté de manière à se déplacer parallèlement à la surface de référence (3).

12. Machine d'encartonnage suivant la revendication 2 caractérisée en ce qu'une série de moyens de butée (7) sont montés sur un support coulissant additionnel (29) qui est monté de manière à se déplacer parallèlement à la surface de référence (3) les moyens de butée (7) étant emboîtés de telle façon qu'ils puissent être remplacés.

13. Machine d'encartonnage suivant la revendication 2 caractérisée en ce que les moyens de butée (7) sont emboîtés dans un creux formé dans la surface de référence (3) de telle façon qu'ils puissent être remplacés.
